(19) **Europäisches Patentamt / European Patent Office / Office européen des brevets**

(11) **EP 1 807 793 B1**

(12) **EUROPEAN PATENT SPECIFICATION**

(45) Date of publication and mention
of the grant of the patent:
**04.08.2010 Bulletin 2010/31**

(21) Application number: **05825648.8**

(22) Date of filing: **04.11.2005**

(51) Int Cl.:
**G06K 9/00** (2006.01)

(86) International application number:
**PCT/US2005/040131**

(87) International publication number:
**WO 2006/052804 (18.05.2006 Gazette 2006/20)**

(54) **OBJECT DETECTION UTILIZING A ROTATED VERSION OF AN IMAGE**

OBJEKTDETEKTION MITHILFE EINER GEDREHTEN VERSION EINES BILDES

DETECTION D'OBJET UTILISANT UNE VERSION TOURNEE D'UNE IMAGE

(84) Designated Contracting States:
**DE FR GB**

(30) Priority: **05.11.2004 US 981486**

(43) Date of publication of application:
**18.07.2007 Bulletin 2007/29**

(73) Proprietor: **HEWLETT-PACKARD DEVELOPMENT COMPANY, L.P.**
**Houston, TX 77070 (US)**

(72) Inventor: **LUO, Huitao**
**Fremont, CA 94539 (US)**

(74) Representative: **Jehan, Robert et al**
**Williams Powell**
**Staple Court**
**11 Staple Inn Buildings**
**London, WC1V 7QH (GB)**

(56) References cited:
**US-A- 6 055 334          US-A1- 2003 016 860**
**US-A1- 2003 108 242**

- **WILLIAM K. PRATT: "Digital Image Processing" 1991, WILEY , XP002373035 paragraphs [20.1], [20.4.2]**

**Description**

BACKGROUND

Most state-of-the-art object detection algorithms are capable of detecting upright, frontal views of various objects. In addition, some of these algorithms are also capable of detecting objects with moderate in-plane rotations. However, the detection performance of these algorithms is difficult or otherwise impracticable to improve once the detection algorithm is fixed, hi other words, the detection rate cannot be improved without increasing the false alarm rates associated with the use of these algorithms. The performance of these object detection algorithms is also limited by the capacity of its fundamental classifier. More particularly, traditional detection algorithms are incapable of improving their detection rates without also increasing their false alarm rates and vice versa, once the capacity of the classifier is reached.

US 6055334 discloses an image processing device and method of detecting the location of a feature of interest in an object image. US 2003/016860 discloses an image processing method and device. EP 1530156 discloses a method of representing an image.

Accordingly, it would be desirable to be able to detect objects with relatively high detection rates and relatively low false alarm rates.

SUMMARY OF THE INVENTION

According to an aspect of the present invention there is provided a method according to claim 1. According to another aspect of the present invention, there is provided an object detection system according to claim 6.

BRIEF DESCRIPTION OF THE DRAWINGS

Features of the present invention will become apparent to those skilled in the art from the following description with reference to the figures, in which:

FIG. 1A shows a block diagram of an object detection system according to an embodiment of the invention;

FIG. 1B shows a block diagram of an object detection system, according to another embodiment of the invention;

FIG. 2 illustrates a flow diagram of an operational mode of a method for detecting objects in images, according to an embodiment of the invention;

FIG. 3 illustrates a flow diagram of an operational mode of a method for detecting objects in images, according to another embodiment of the invention;

FIG. 4 illustrates a flow diagram of an operational mode of a method for detecting objects in images, according to a further embodiment of the invention; and

FIG. 5 illustrates a computer system, which may be employed to perform the various functions of object detection systems described hereinabove, according to an embodiment of the invention.

DETAILED DESCRIPTION OF THE INVENTION

For simplicity and illustrative purposes, the present invention is described by referring mainly to an exemplary embodiment thereof. In the following description, numerous specific details are set forth in order to provide a thorough understanding of the present invention. It will be apparent however, to one of ordinary skill in the art, that the present invention may be practiced without limitation to these specific details. In other instances, well known methods and structures have not been described in detail so as not to unnecessarily obscure the present invention.

Spatial filtering algorithms are disclosed herein to improve the performance of various object detection algorithms. In general, the spatial filtering algorithms are designed to boost performance of the various object detection algorithms by leveraging upon the spatial redundancies between multiple rotated versions of an image. In addition, the spatial filtering algorithms are not linked to any specific type of object detection algorithm, and thus, may be employed with a number of different object detection algorithms.

In other words, the spatial filtering algorithms disclosed herein are designed to accurately detect objects, such as, for instance, human faces, automobiles, household products, etc., through generation and evaluation of multiple rotated versions of one or more images. In one respect, the spatial filtering algorithms may determine in which of the rotated versions the same objects are detected. If the same detected objects appear in multiple ones of the rotated versions of an image, there is a relatively high probability that the potential detected objects are the actual objects in the image. Alternatively, if a potential detected object does not appear in at least one of the multiple rotated versions, there is a relatively high probability that the potential detected object is not the desired object, and thus, may be disregarded. In this regard, through implementation of the spatial filtering algorithms disclosed herein, the detection rates of various object detection algorithms may be improved without also increasing their false alarm rates.

The spatial filtering algorithms disclosed herein may have relatively broad applicability and may thus be employed with a wide variety of object detection algorithms. For instance, these spatial filtering algorithms may be employed with object detection algorithms having applications in face based content analysis, human identification management, image quality evaluation, artificial intelligence, etc.

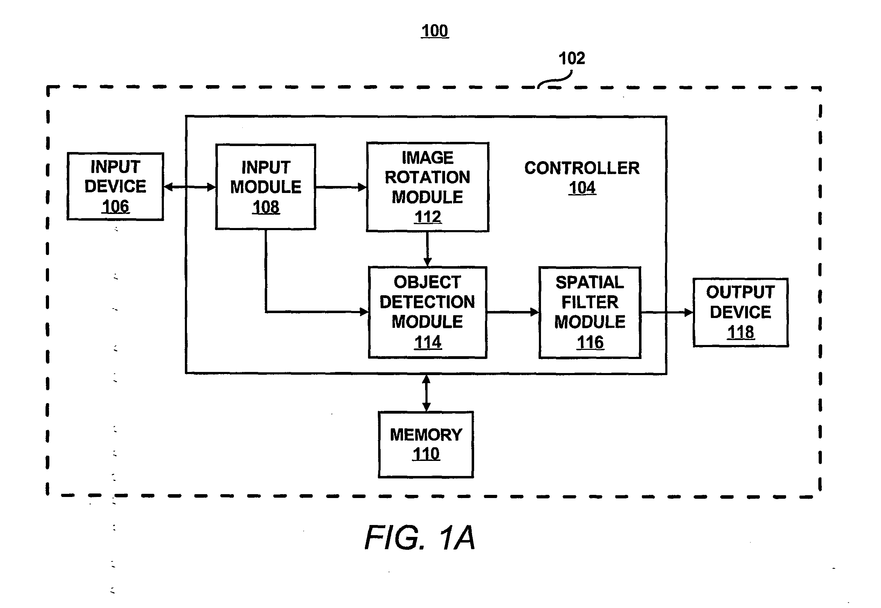

With reference first to FIG. 1A, there is shown a block diagram 100 of an object detection system 102. It should be understood that the following description of the block diagram 100 is but one manner of a variety of different manners in which such an object detection system 102 may be configured. In addition, it should be understood that the object detection system 102 may include additional elements and that some of the elements described herein may be removed and/or modified without departing from a scope of the object detection system 102. For instance, the object detection system 102 may include additional input devices, output devices, memories, modules, etc.

The object detection system 102 includes a controller 104 configured to perform various functions of the object detection system 102. In this regard, the controller 104 may comprise a computing device, for instance, a computer system, a server, etc. In addition, the controller 104 may comprise a microprocessor, a micro-controller, an application specific integrated circuit (ASIC), and the like, configured to perform various processing functions.

The controller 104 may be interfaced with an input device 106 configured to supply the controller 104 with information, such as, for instance, image data. The input device 106 may comprise a machine in a computing device in which the controller 104 is housed. In this regard, the input device 106 may comprise a storage device, such as, a CD-ROM drive, a floppy diskette drive, compact flash memory reader, etc. In addition, or alternatively, the input device 106 may comprise a device separate from the controller 104 as pictured in FIG. 1A. In this regard, for instance, the input device 106 may comprise an external drive, a camera, a scanning machine, an interface with an internal network or the Internet, etc.

In any event, the controller 104 may receive image data from the input device 106 through an input module 108. The input module 108 may comprise one or more drivers for enabling communications and data transfer from the input device 106 to the controller 104. In addition, the controller 104 may be configured to communicate and transfer data back to the input device 106 to thereby control certain operations of the input device 106. Thus, for instance, the controller 104 may transmit communications to the input device 106 to thereby receive the image data. The controller 104 may communicate with the input device 106 via an Ethernet-type connection or through a wired protocol, such as IEEE 802.3, etc., or wireless protocols, such as IEEE 802.11b, 802.11g, wireless serial connection, Bluetooth, etc., or combinations thereof.

The image data received from the input device 106 may be stored in a memory 110 accessible by the controller 104. The memory 110 may comprise a traditional memory device, such as, volatile or non-volatile memory, such as DRAM, EEPROM, flash memory, combinations thereof, and the like. The controller 104 may store the image data in the memory 110 so that the image data may be retrieved for future manipulation and processing as disclosed in greater detail herein below. In addition, the memory 110 may store software, programs, algorithms, and subroutines that the controller 104 may access in performing the various object detection algorithms as described herein below.

Also shown in FIG. 1A is an image rotation module 112 configured to manipulate the image data such that the image formed by the image data may be rotated. Although the image rotation module 112 is depicted as being included in the controller 104, the image rotation module 112 may comprise an algorithm stored in the memory 110, which the controller 104 may access and execute. In addition, the image rotation module 112 may comprise other software or hardware configured to perform the above-described functions. In any regard, the image rotation module 112 may be programmed to rotate the image formed by the image data to one or more angles with respect to the original image. Thus, for instance, the image rotation module 112 may be configured to rotate the image in an in-plane direction in increments of about 1 to 5° from the original orientation of the image in either clockwise or counterclockwise directions. The number of image rotation increments may be based, for instance, upon the desired level of accuracy in detecting objects. Thus, the greater the number of image rotation increments, the greater the level of accuracy in detecting objects. However, in certain instances, images that are rotated to a relatively high angle may actually reduce the accuracy in detecting objects due to the possibility that an object detection module 114 may be unable to accurately detect the objects in these rotated images. In this regard, the number of image rotation increments may be determined based on the specific detection feature of the underlying object detection module 114 and may, for instance, be around 1-5 increments.

The object detection system 102 is also illustrated as including the object detection module 114, which is configured to detect predetermined objects in the image formed by the image data. Again, although the object detection module 114 is depicted as being included in the controller 104, the object detection module 114 may comprise an algorithm stored in the memory 110, which the controller 104 may access and execute. In addition, the object detection module 114 may comprise any reasonably suitable conventional algorithm capable of detecting objects in images. By way of example, the objection detection module 114 may comprise a Viola and Jones algorithm. The object detection module 114 may further comprise other software or hardware configured to perform the above-described functions.

The controller 104 may employ the object detection module 114 to detect predetermined objects in the original image as well as in the images that have been rotated by the image rotation module 112. In addition, or alternatively, the object detection module 114 may use different parameter configurations of the same algorithm, or even different algorithms to process images rotated to different angles. The images, with the detected locations of the potential objects, may be inputted into a spatial filter module 116. The spatial filter module 116 may comprise an algorithm stored in the memory 110 that may be accessed and executed by the controller 104. In addition, the spatial filter module 116 may comprise other software or hardware configured to perform the functions of the spatial filter module 116 described herein.

The spatial filter module 116 generally operates to compare the images, two or more of the rotated and original images, to determine which of the images contain the detected objects. If the objects are detected in a plurality of images, for instance, in both the original image and a rotated image or in multiple rotated images, the spatial filter 116 may output an indication that the objects have been accurately detected. However, for greater accuracy, the spatial filter module 116 may compare a plurality of rotated images, and in certain instances, the original image, to determine which of the rotated images and the original image contain the detected objects. Some of the manners in which the spatial filter may be operated are described in greater detail herein below.

The spatial filter module 116 may output information pertaining to the detected images to an output device 118. The output device 118 may comprise, for instance, a display on which the image is shown with the locations of the detected objects. In addition, or alternatively, the output device 118 may comprise, for instance, another machine or program configured to employ the detected object information. By way of example, the output device 118 may comprise an object recognition program, such as, an image quality evaluation program, a human identification program, a guidance system for a robotic device, etc. As a further example, the output device 118 may comprise one or more of the components described hereinabove with respect to the input device 106, and may, in certain instances, comprise the input device 106.

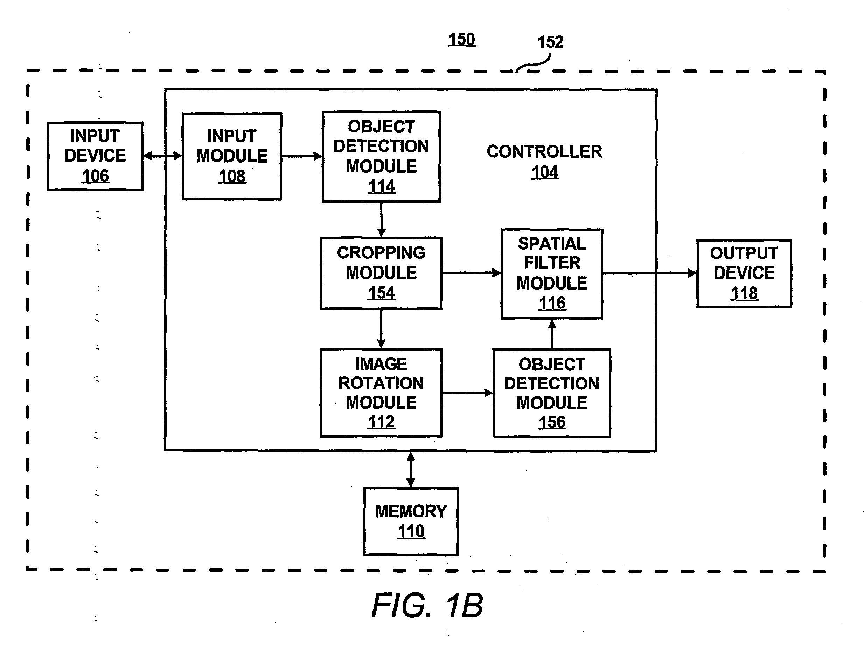

With reference now to FIG. 1B, there is shown a block diagram 150 of an object detection system 152. It should be understood that the following description of the block diagram 150 is but one manner of a variety of different manners in which such an object detection system 152 may be configured. In addition, it should be understood that the object detection system 152 may include additional elements and that some of the elements described herein may be removed and/or modified without departing from a scope of the object detection system 152. For instance, the object detection system 152 may include additional input devices, output devices, modules, memories, etc.

The object detection system 152 contains many of the same elements as set forth herein above with respect to the object detection system 102 depicted in FIG. 1A. As such, detailed descriptions of the elements having the same reference numerals as those elements illustrated in the object detection system 102 of FIG. 1A will not be provided with respect to the object detection system 152. Instead, the descriptions set forth hereinabove for those common elements are relied upon as providing sufficient disclosure for an adequate understanding of those elements.

One major distinction between the object detection system 152 depicted in FIG. 1B and the object detection system 102 depicted in FIG. 1A is that the objection detection system 152 includes a cropping module 154. The cropping module 154 is generally configured to crop out or otherwise distinguish which objects detected by the object detection module 114 are the potential predetermined objects that are to be detected. Although the cropping module 154 is depicted as being included in the controller 104, the cropping module 154 may comprise an algorithm stored in the memory 110, which the controller 104 may access and execute. In addition, the cropping module 114 may comprise any reasonably suitable conventional algorithm capable of cropping various images. The cropping module 154 may further comprise other software or hardware configured to perform the various cropping functions described herein.

The object detection module 114 in the object detection system 152 maybe set to detect predetermined objects with a relatively high degree of accuracy while sacrificing the possibility of increased false alarm rates. The reason for this type of setting is that through implementation of the spatial filter module 116, the false alarms may be filtered out of the detected results.

In any regard, in the object detection system 152, the regions containing the potential predetermined objects cropped out by the cropping module 154 may be rotated by the image rotation module 112. The image rotation module 112 in the object detection system 152 may be configured to rotate these regions to one or more angles with respect to their original positions. Thus, for instance, the image rotation module 112 may be configured to rotate the cropped regions in an in-plane direction in increments of about 1 to 5° from the original orientation of the image in either clockwise or counterclockwise directions. The number of cropped region rotation increments may be based, for instance, upon the desired level of accuracy in detecting the predetermined objects. Thus, the greater the number of cropped region rotation increments, the greater the level of accuracy in detecting the predetermined objects. However, in certain instances, cropped regions that are rotated to a relatively high angle may actually reduce the accuracy in detecting objects due to the possibility that the object detection module 152 may be unable to accurately detect the objects in these rotated cropped regions. In this regard, the number of cropped region rotation increments may be determined based on the specific detection feature of the underlying object detection module 114 and may, for instance, be around 1-5 increments.

Another distinction between the object detection systems 102, 152 is that the object detection system 152 includes a second object detection module 156 configured to detect a potential object in a rotated cropped region of the image. The second object detection module 156 may comprise the object detection module 114. Alternatively, the second object detection module 156 may comprise an entirely different object detection module configured to detect predetermined objects in images. In the event the second object detection module 156 comprises the object detection module 114, the second object detection module 156 may comprise different parameter configurations from the object detection module 114.

The controller 104 may employ the second object detection module 156 to detect predetermined obj ects in the cropped regions that have been rotated by the image rotation module 112. The cropped regions may be inputted into the spatial filter module 116. The spatial filter module 116 may compare the cropped regions, two or more of the rotated and original cropped regions, to determine which of the cropped regions contain the detected objects. If the objects are detected in a plurality of cropped regions, for instance, in both the original cropped region and a rotated cropped region or in multiple rotated cropped regions, the spatial filter 116 may output an indication that the objects have been accurately detected. However, for greater accuracy, the spatial filter module 116 may determine in which of a plurality of rotated cropped regions, and in certain instances the original cropped region, the objects have been detected. As described hereinabove with respect to the object detection system 102, the spatial filter module 116 may output information pertaining to the detected cropped regions to the output device 118.

In one respect, the object detection system 152 may be capable of detecting the predetermined obj ects at greater speeds relative to the obj ect detection system 102. This may be true because the object detection system 152 may have less data to process as compared with the object detection system 102 because the object detection system 152 mainly processes the cropped portions of an image.

The spatial filter module 116 will now be described in greater detail. In general, the spatial filter module 116 is configured to find consistency among the results detected by either of the obj ect detection modules 114,156 based upon multiple rotated versions of images or cropped regions. In a first example, the spatial filter module 116 is based upon a concept that a real predetermined object in an original image (I) is likely to be detected on rotated images ($R_m$(I)), where m = 1,2, ..., n. This example is also based upon the concept that false alarms or false positives of the predetermined objects are unlikely to be detected in an original image (I) and rotated images ($R_m$(I)). This is true because the false alarms may be considered as random signals which are less likely to be consistently detected in multiple rotated images.

In FIGS. 1A and 1B, the results detected by the object detection module 114, 156 from each of the images, both the original image and rotated images, may include multiple objects. The multiple objects may be decomposed as $O_m = \{O_m(1), O_m(2),..., O_m(n)\}$. In this example, prior to executing the spatial filter module 116, each of the detected objects $O_m(j)$, where m denotes the image at various angles, and j denotes each of the objects, is first mapped back to the original image so that their spatial relationships may be compared. For each detected object $O_m(j)$, the spatial filter module 116 searches in the detection results $O_k$, k≠m, in an attempt to find corresponding detection results that refer to the same object that is represented by $O_m(j)$. In this process, a consistency vector $\{v_1, v_2, ..., v_n\}$ is generated (for each object "j") such that if a corresponding detection result is found on rotated image $R_m(I)$, the vector component $v_m$ is set to one, otherwise the vector component $v_m$ is set to zero. The final spatial filter module 116 output is determined by a weighted sum:

$$\text{sum} = w_1{}^*v_1 + w_2{}^*v_2 + \ldots + w_n{}^*v_n.$$

The final output of the spatial filter module 116 is considered a valid detection if the value of "sum" is greater than a threshold "t". Otherwise, if the value of "sum" is less than the threshold "t", the detection may be considered as a false alarm. The weights $\{w_1, w_2, ..., w_n\}$ and the corresponding threshold "t" may be set by using any suitable conventional machine learning algorithm, such as, for instance, Adaboost, as disclosed in Y. Freund and R. Schapire, "A Short Introduction to Boosting", Journal of Japanese Society for Artificial Intelligence, pp. 771-780, September 1999.

In addition, or alternatively, each component of the consistency vector $\{v_1, v_2, ..., v_n\}$ may comprise a real-valued confidence indicator generated by the underlying object detection module 114,156. In addition, a weighted sum for each of the components may also be calculated by the underlying object detection module 114, 156.

In a second example, the spatial filter module 116 is based upon various heuristic designs. These heuristic designs may be characterized as "1-or", "1-and", and "2-or" filters. The "1-or" filter may be defined as:

$$OD(R(I,a)) \parallel OD(R(I,-a)).$$

The "1-and" filter may be defined as:

$$OD(R(I,a)) \text{ \&\& } OD(R(I,-a)).$$

The "2-or" filter may be defined as:

$$[OD(R(I,a)) \text{ \&\& } OD(R(I,-a))] \parallel [OD(R(I,-2a)) \text{ \&\& } OD(I,-a)] \parallel [OD(R(I,2a)) \text{ \&\& } OD(I,a)].$$

In each of the filters described above, the image or a cropped region of an image is represented by "I", "R(I, a)" represents a rotated version of the image or the cropped region by "a" degree, where "a" is a predefined parameter that determines the degree of rotation, the "&&" is an "and" operator, and the "∥" is an "or" operator. The "OD()" represents the object detection module 114, 156 that returns a binary output. The binary output may include, for instance, OD(R(I, a)) = 1, which indicates that an object is detected in the rotated image that has a size similar to the original detected object region. Otherwise OD(R(I, a)) = 0 indicates that an object has not been detected in the rotated image that has a size similar to the original detected object.

By way of example with respect to the "1-and" filter, if d0 is a potential object in the original image or a cropped region of the original image, d1 is a potential object in the image or cropped region rotated to an angle "a" and d2 is a potential object in the image or cropped region rotated to an angle "-a", an object may be determined as being correctly detected if d1 = 1 or if d2 =1. More particularly, d1 may equal 1 if a comparison between d1 and d0 indicates that d1 has a size similar to d0. In addition, d2 may equal 1 if a comparison between d2 and d0 indicates that d2 has a size similar to d0. Otherwise, if both d1 and d2 equal 0, then the potential object detected as d0 may be considered as a false alarm.

As an example of the "1-and" filter, an object may be determined as being correctly detected if d1 and d2 both equal 1. Thus, if either d1 or d2 equal 0, then the potential objected detected as d0 may be considered as a false alarm.

By way of example with respect to the "2-or" filter, d3 is a potential object in the image or cropped region rotated to another angle "-2a" and d4 is a potential object in the image or cropped region rotated to another angle "2a". In this filter, an obj ect may be determined as being correctly detected if d1 and d2 equal 1, d3 and d2 equal 1, d4 and d1 equal 1, d2 and d4 equal 1, d3 and d4 equal 1, or if d3 and d1 equal one.

Although the various filters were described above with particular numbers of rotated images or cropped regions of images, it should be appreciated that these filters may function with any reasonably suitable number of rotated images or cropped regions of images. In this regard, the examples of the filters described herein above are not meant to be limited to the number of rotated images or cropped regions of images described, but instead, may used with any suitable number of rotated images or cropped regions of images.

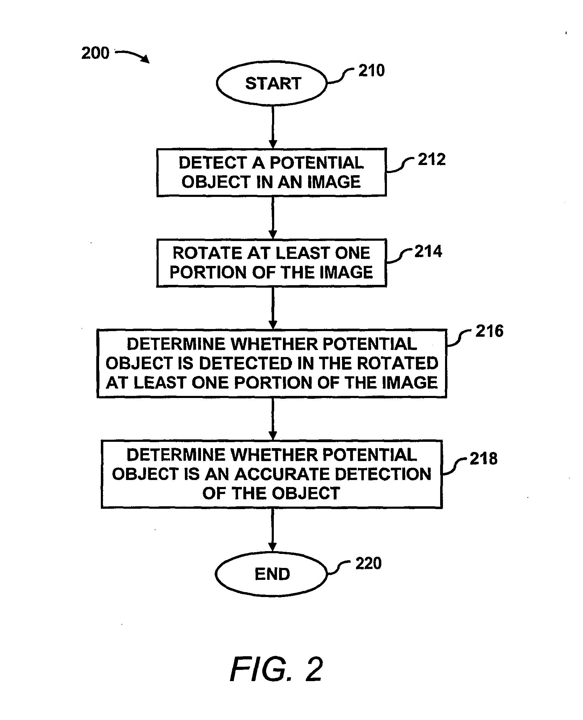

FIG. 2 illustrates a flow diagram of an operational mode 200 of a method for detecting objects in images. It is to be understood that the following description of the operational mode 200 is but one manner of a variety of different manners in which the operational mode 200 be practiced. It should also be apparent to those of ordinary skill in the art that the operational mode 200 represents a generalized illustration and that other steps may be added or existing steps may be removed, modified or rearranged without departing from a scope of the operational mode 200.

The description of the operational mode 200 is made with reference to the block diagrams 100 and 150 illustrated in FIGS. 1A and 1B, respectively, and thus makes reference to the elements cited therein. It should, however, be understood that the operational mode 200 is not limited to the elements set forth in the block diagrams 100 and 150. Instead, it should be understood that the operational mode 200 may be practiced by an object detection system having a different configuration than that set forth in the block diagrams 100 and 150.

The operational mode 200 may be manually initiated at step 210 through an instruction received by the controller 104 from a user. Alternatively, the operational mode 200 may be initiated following a predetermined period of time, in response to receipt of various signals, through detection of an input device 106, etc. In any respect, at step 212, a potential object may be detected in an image. The potential object may comprise a predetermined object that the controller 104 is programmed to detect.

At step 214, at least a portion of the image may be rotated. More particularly, one or more cropped regions or the entire image may be rotated at step 214. The manners in which the at least one portion of the image may be rotated are described in greater detail hereinabove with respect to the image rotation module 112.

At step 216, it may be determined whether the potential obj ect is detected in the rotated at least one portion of the image. As described herein above, the detection of the potential object in the at least one portion of the image may be performed by a different object detection module from the object detection module used to detect the potential object at step 212, or it may be performed by the same object detection module. If the same object detection module is used, the object detection module may have different parameter configurations to detect the potential object in the rotated at least one portion of the image. Based upon the determination of whether the potential object is detected in the rotated at least one portion of the image, a determination of whether the potential object is an accurate detection of the object may be made as indicated at step 218.

The operational mode 200 may end as indicated at step 220. The end condition may be similar to an idle mode for the operational mode 200 since the operational mode 200 may be reinitiated, for instance, when another image is received for processing.

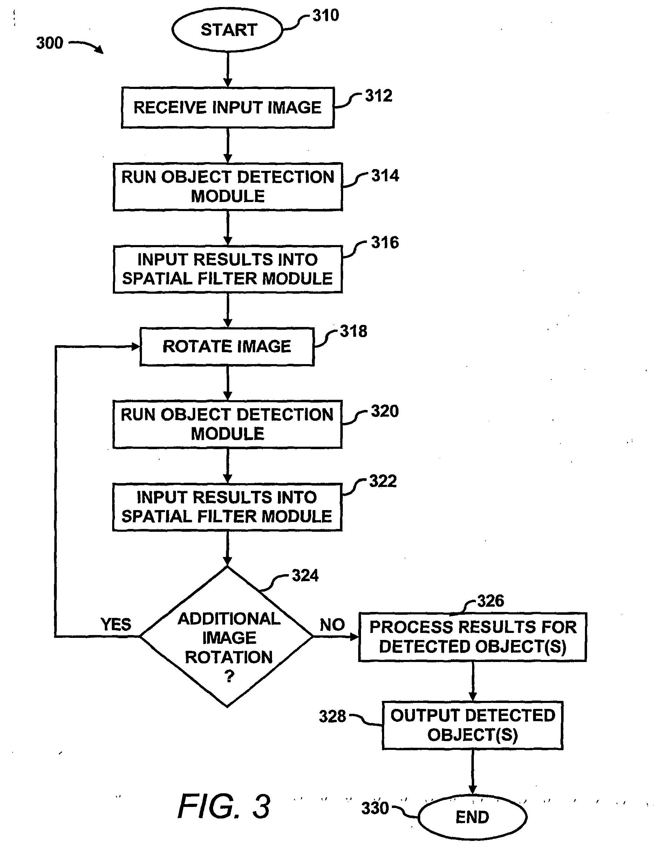

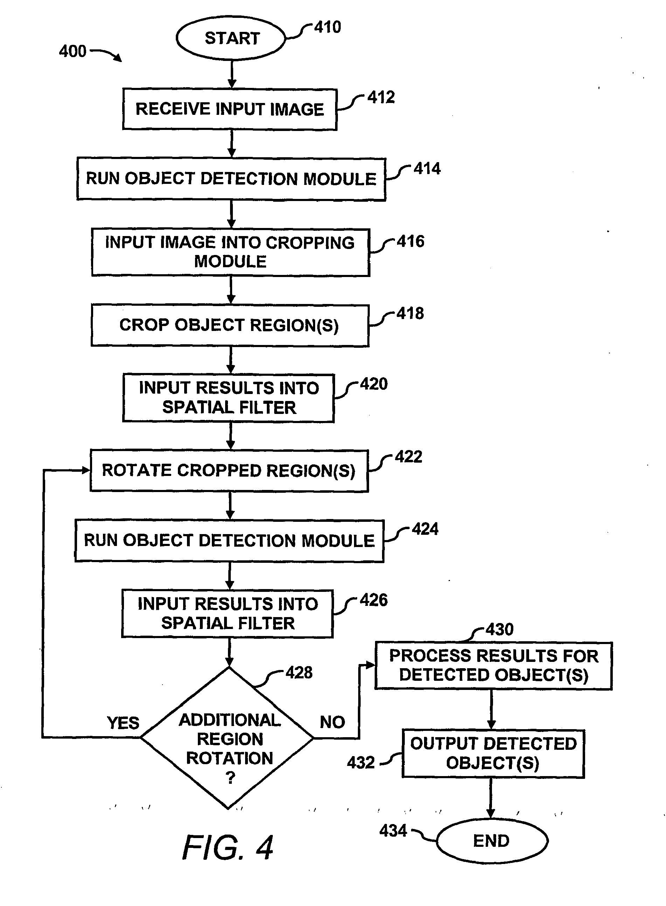

Additional steps that may be employed with the operational mode 200 are described with respect to FIGS. 3 and 4 below.

FIG. 3 illustrates a flow diagram of an operational mode 300 of a method for detecting objects in images. It is to be understood that the following description of the operational mode 300 is but one manner of a variety of different manners in which the operational mode 300 may be practiced. It should also be apparent to those of ordinary skill in the art that the operational mode 300 represents a generalized illustration and that other steps may be added or existing steps may be removed, modified or rearranged without departing from a scope of the operational mode 300.

The description of the operational mode 300 is made with reference to the block diagram 100 illustrated in FIG. 1A, and thus makes reference to the elements cited therein. It should, however, be understood that the operational mode 300 is not limited to the elements set forth in the block diagram 100. Instead, it should be understood that the operational mode 300 may be practiced by an object detection system having a different configuration than that set forth in the block diagram 100.

The operational mode 300 may be manually initiated at step 310 through an instruction received by the controller 104 from a user. Alternatively, the operational mode 300 may be initiated following a predetermined period of time, in response to receipt of various signals, through detection of an input device 106, etc. In addition, at step 312, the controller 104 may receive input image data from the input device 106. Various manners in which the controller 104 may receive the image data are described in greater detail hereinabove with respect to FIG. 1A.

At step 314, the controller 104 may run the object detection module 114 to detect potential predetermined obj ects in the image represented by the image data received at step 312. More particularly, the object detection module 114 may be programmed or otherwise configured to detect the predetermined objects in an image. Thus, the object detection module 114 may process the image to determine the locations or regions in the image where the potential obj ects are located. In one respect, the obj ect detection module 114 may operate to create boxes or other identification means around the potential objects to note their locations or regions in the image. The results of the obj ect detection module 114 may be inputted into the spatial filter module 116, as indicated at step 316.

The input image may also be rotated by the image rotation module 112 as indicated at step 318. As described hereinabove, the image rotation module 112 may rotate the image in an in-plane direction in an increment of about 1 to 5 degrees from the original orientation of the image in either clockwise or counterclockwise directions. Thus, the input image maybe rotated to a first angle by the image rotation module 112. In addition, the controller 104 may run the obj ect detection module 114 to detect potential predetermined obj ects in the rotated image at step 320. As in step 314, the object detection module 114, or a different object detection module (not shown), may be configured to process the rotated image to determine the locations or regions in the rotated image where the potential objects are located. Again, the object detection module 114, or the different object detection module, may create boxes or other identification means around the potential objects to note their locations or regions in the rotated image. The results of the object detection module 114 are again inputted into the spatial filter module 116, at step 322.

The object detection module may store the results in the memory 110, such that the results may be accessed by the spatial filter module 116 to process the images as described below. In this regard, at steps 316 and 322, instead of inputting the results into the spatial filter module 116, the results may be inputted into the memory 110.

At step 324, the controller 104 may determine whether additional object detections on rotated images are to be obtained. This determination may be based upon the desired level of accuracy in detecting obj ects in an image. For instance, a larger number of rotated images, within prescribed limits, may be analyzed for greater accuracy in detecting the desired objects. Alternatively, a lesser number of rotated images may be analyzed for faster object detection processing. The controller 104 may be programmed with the number of rotated images to be analyzed and thus may determine whether an additional image rotation is to be obtained based upon the programming. In addition, the number of image rotation increments may be determined based on the specific detection feature of the underlying object detection module 114 and may, for instance, be around 1-5 increments.

If the controller 104 determines that an additional image rotation is required, steps 318-324 may be repeated.

In addition, steps 318-324 may be repeated until the controller 104 determines that a predetermined number of rotated images have been processed. At that time, which is equivalent to a "no" condition at step 324, the spatial filter 116 may process the results of objection detection module 114 for the one or more rotated images at step 226. More particularly, the spatial filter module 116 may compare the various results to determine the locations of the predetermined objects in the original image and to remove false alarms or false positives from the detection results. A more detailed description of various manners in which the spatial filter 116 may operate to make this determination is set forth hereinabove.

The results from the spatial filter module 116 may also be outputted to the output device 118 at step 328. In one regard, the output device 118 may comprise a display device and may be used to display the locations of the detected predetermined objects. In another regard, the output device 118 may comprise another device or program configured to use the detected predetermined object information.

The operational mode 300 may end as indicated at step 330. The end condition may be similar to an idle mode for the operational mode 300 since the operational mode 300 may be reinitiated, for instance, when the controller 104 receives another input image to process.

FIG. 4 illustrates a flow diagram of an operational mode 400 of another method for detecting objects in images. It is to be understood that the following description of the operational mode 400 is but one manner of a variety of different manners in which the operational mode 400 be practiced. It should also be apparent to those of ordinary skill in the art that the operational mode 400 represents a generalized illustration and that other steps may be added or existing steps may be removed, modified or rearranged without departing from a scope of the operational mode 400.

The description of the operational mode 400 is made with reference to the block diagram 150 illustrated in FIG. 1B, and thus makes reference to the elements cited therein. It should, however, be understood that the operational mode 300 is not limited to the elements set forth in the block diagram 150. Instead, it should be understood that the operational mode 400 may be practiced by an object detection system having a different configuration than that set forth in the block diagram 150.

The operational mode 400 may be manually initiated at step 410 through an instruction received by the controller 104 from a user. Alternatively, the operational mode 400 may be initiated following a predetermined period of time, in response to receipt of various signals, through detection of an input device 106, etc. In addition, at step 412, the controller 104 may receive input image data from the input device 106. Various manners in which the controller 104 may receive the image data are described in greater detail hereinabove with respect to FIG. 1A.

At step 414, the controller 104 may run the object detection module 114 to detect potential predetermined objects in the image represented by the image data received at step 412. More particularly, the obj ect detection module 114 may be programmed or otherwise configured to detect the predetermined objects in an image. Thus, the object detection module 114 may process the image to determine the locations or regions in the image where the potential objects are located. In one respect, the obj ect detection module 114 may operate to create boxes or other identification means around the potential objects to note their locations or regions in the image. The results of the object detection module 114 may be inputted into the cropping module 154, as indicated at step 416.

At step 418, the cropping module 154 may crop the regions detected as being potential predetermined objects by the object detection module 114. In addition, the cropping module may input the cropped regions into the spatial filter module 116, at step 420. The cropping module may also input the cropped regions into the image rotation module 112. At step 422, the image rotation module 112 may rotate the cropped regions. As described hereinabove, the image rotation module 112 may rotate the cropped regions in an in-plane direction in an increment of about 1 to 5 degrees from the original orientation of the cropped regions in either clockwise or counterclockwise directions. Thus, the cropped regions may be rotated to a first angle by the image rotation module 112 at step 422.

The rotated cropped regions may be inputted into the object detection module 156, which, as described hereinabove, may comprise the object detection module 114 or a separate object detection module. In addition, the object detection module 156 may be run to determine whether the rotated cropped regions each contain a potential detected object at step 424. The object detection module 156 may be configured to remove the boxes or other identification means from those cropped regions where the potential predetermined objects are not detected by the object detection module 156. In addition, the object detection module 156 may be configured to input the results of the object detection into the spatial filter 116 at step 426.

The object detection module 114, 156 may store the results of respective object detections in the memory 110, such that the results may be accessed by the spatial filter module 116 to process the images as described below. In this regard, at steps 420 and 426, instead of inputting the results into the spatial filter module 116, the results may be inputted into the memory 110.

At step 428, the controller 104 may determine whether additional object detections on rotated cropped regions are to be obtained. This determination may be based upon the desired level of accuracy in detecting objects in an image. For instance, a larger number of rotated cropped regions, within prescribed limits, may be analyzed for greater accuracy in detecting the desired objects. Alternatively, a lesser number of rotated cropped regions may be analyzed for faster object detection processing. The controller 104 may be programmed with the number of rotated cropped regions to be analyzed and thus may determine whether an additional cropped region rotation is to be obtained based upon the programming. In addition, the number of image rotation increments may be determined based on the specific detection feature of the underlying object detection module 114 and may, for instance, be around 1-5 increments.

If the controller 104 determines that an additional cropped region rotation is required, steps 422-428 may be repeated. In addition, steps 422-428 may be repeated until the controller 104 determines that a predetermined number of rotated cropped region have been processed. At that time, which is equivalent to a "no" condition at step 428, the spatial filter 116 may process the results of obj ection detection modules 114,156 for the one or more rotated cropped regions at step 430. More particularly, the spatial filter module 116 may compare the various results to determine the locations of the predetermined objects in the original image and to remove false alarms or positives from the detection results. A more detailed description of various manners in which the spatial filter 116 may operate to make this determination is set forth hereinabove.

The results from the spatial filter module 116 may also be outputted to the output device 118 at step 432. In one regard, the output device 118 may comprise a display device and may be used to display the locations of the detected predetermined objects. In another regard, the output device 118 may comprise another device or program configured to use the detected predetermined object information.

The operational mode 400 may end as indicated at step 434. The end condition may be similar to an idle mode for the operational mode 400 since the operational mode 400 may be reinitiated, for instance, when the controller 104 receives another input image to process.

The operations illustrated in the operational modes 200, 300, and 400 may be contained as a utility, program, or a subprogram, in any desired computer accessible medium. In addition, the operational modes and 200, 300, and 400 may be embodied by a computer program, which can exist in a variety of forms both active and inactive. For example, they can exist as software program(s) comprised of program instructions in source code, object code, executable code or other formats. Any of the above can be embodied on a computer readable medium, which include storage devices and signals, in compressed or uncompressed form.

Exemplary computer readable storage devices include conventional computer system RAM, ROM, EPROM, EEPROM, and magnetic or optical disks or tapes. Exemplary computer readable signals, whether modulated using a carrier or not, are signals that a computer system hosting or running the computer program can be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general. It is therefore to be understood that any electronic device capable of executing the above-described functions may perform those functions enumerated above.

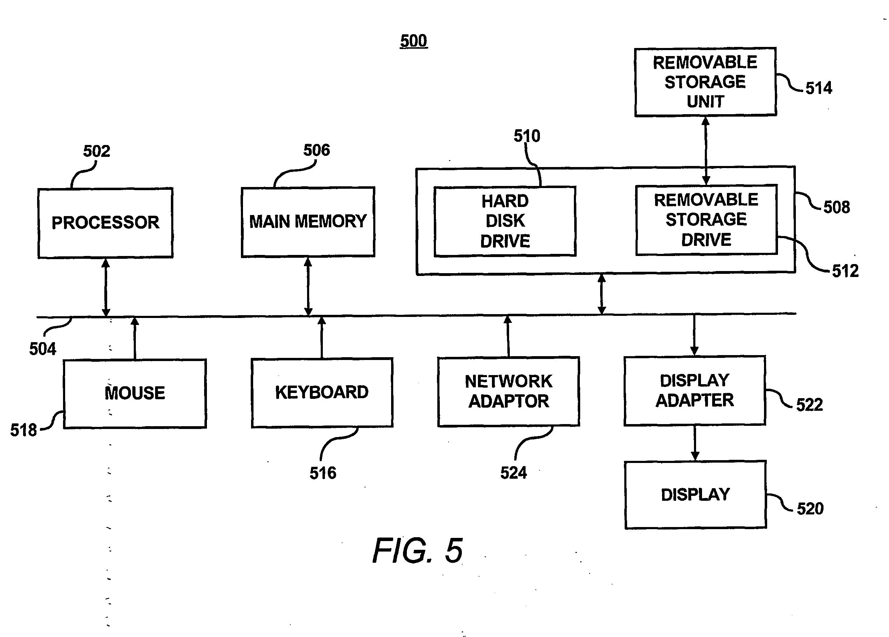

FIG. 5 illustrates a computer system 500, which may be employed to perform the various functions of the obj ect detection systems 102 and 152 described hereinabove. In this respect, the computer system 500 may be used as a platform for executing one or more of the functions described hereinabove with respect to the object detection systems 102 and 152.

The computer system 500 includes one or more controllers, such as a processor 502. The processor 502 may be used to execute some or all of the steps described in the operational modes 200, 300, and 400. In this regard, the processor 502 may comprise the controller 104. Commands and data from the processor 502 are communicated over a communication bus 504. The computer system 500 also includes a main memory 506, such as a random access memory (RAM), where the program code for, for instance, the obj ect detection systems 102 and 152, may be executed during runtime, and a secondary memory 508. The main memory 506 may, for instance, comprise the memory 110 described hereinabove.

The secondary memory 508 includes, for example, one or more hard disk drives 510 and/or a removable storage drive 512, representing a floppy diskette drive, a magnetic tape drive, a compact disk drive, etc., where a copy of the program code for the obj ect detection system 102, 152 may be stored. The secondary memory 508 may comprise the input device 106 and/or the output device 118. In addition, although not shown, the input device 106 may comprise a separate peripheral device, such as, for instance, a camera, a scanner, etc. The input device 106 may also comprise a network, such as, the Internet.

The removable storage drive 512 reads from and/or writes to a removable storage unit 514 in a well-known manner. User input and output devices may include a keyboard 516, a mouse 518, and a display 520, which may also comprise the output device 118. A display adaptor 522 may interface with the communication bus 504 and the display 520 and may receive display data from the processor 502 and convert the display data into display commands for the display 520. In addition, the processor 502 may communicate over a network, for instance, the Internet, LAN, etc., through a network adaptor 524.

It will be apparent to one of ordinary skill in the art that other known electronic components maybe added or substituted in the computer system 500. In addition, the computer system 500 may include a system board or blade used in a rack in a data center, a conventional "white box" server or computing device, etc. Also, one or more of the components in FIG. 5 may be optional (for instance, user input devices, secondary memory, etc.).

**Claims**

1. A method (200, 300, 400) for detecting a predetermined object in an image, said method (200, 300, 400) **characterized by**:

   a) detecting (212, 314, 414) a potential predetermined object in the image;
   b) rotating (214, 318, 422) at least one portion of the image by about 1 to 5° in a clockwise or counter-clockwise direction;
   c) determining (216, 320, 424) whether the potential predetermined object is detected in the rotated at least one portion of the image; and
   d) determining (218, 326, 430) whether the potential predetermined object is an accurate detection of the predetermined object in response to a determination of whether the potential predetermined object is detected in steps a) and c).

2. The method (200, 300, 400) according to claim 1, wherein the step of determining (218, 326, 430) whether the potential predetermined object is an accurate detection of the predetermined object comprises comparing the sizes of the potential predetermined object in the image and the potential predetermined object detected in the rotated at least one portion of the image (326, 430), said method further comprising:

   outputting (328, 432) an indication that the potential predetermined object is an accurate detection of the predetermined object in response to the comparison indicating that the sizes of the potential predetermined object in the image and the potential predetermined object in the rotated at least one portion of the image are substantially similar; and
   outputting (328, 432) an indication that the potential predetermined object is an a false alarm in response to the comparison indicating that the sizes of the potential predetermined object in the image and the potential predetermined object in the rotated at least one portion of the image are dissimilar.

3. The method (200, 300, 400) according to claim 1, further comprising:

   rotating (318, 422) the at least one portion of the image by a plurality of increments each of about 1 to 5° in a clockwise or counter-clockwise direction; detecting (320, 424) whether the potential predetermined object is detected in one or more of the plurality of increments; and determining (326, 430) whether the potential predetermined object is an accurate detection of the predetermined object in response to detecting whether the potential predetermined object is detected in one or more of the plurality of increments.

4. The method (200, 300, 400) according to any of claims 1-3, further comprising:

   cropping (418) a region in the image containing the potential predetermined object,
   wherein the step of rotating (422) at least one portion of the image comprises rotating the cropped region of the image.

5. The method (200, 300, 400) according to claim 4, wherein the step of determining (430) whether the potential predetermined object is an accurate detection of the predetermined object further comprises determining whether the potential predetermined object is detected in the rotated cropped region of the image, said method further comprising: outputting (432) an indication that the potential predetermined object is an accurate detection of the predetermined object in response to the potential predetermined object being detected in the rotated cropped region of the image.

6. An object detection system (102, 152) **characterised by**:

   an object detection module (114) configured to detect a potential predetermined object in an image;
   an image rotation module (112) configured to rotate at least one portion of the image by about 1 to 5° in a clockwise or counter-clockwise direction;
   said object detection module (114) being configured to detect the potential predetermined object in the rotated at least one portion of the image;

a spatial filter module (116) configured to compare detection results from the object detection module (114) of the image and the rotated at least one portion of the image to determine whether the potential predetermined object detected by the object detection module (114) is an accurate detection of the predetermined object.

7. The object detection system (102, 152) according to claim 6, wherein the spatial filter module (116) is configured to output a determination that the potential predetermined object detected by the object detection module (114) is an accurate detection of the predetermined object if the potential predetermined object is detected in the rotated at least one portion of the image.

8. The object detection system (102, 152) according to any of claims 6 and 7, wherein the spatial filter module (116) is configured to output an indication that the potential predetermined object detected by the object detection module (114) is an accurate detection of the predetermined object if the following equations are satisfied: sum = $w_1 * v_1 + w_2 * v_2 + ... + w_n * v_n$, and sum > t, where $w_1, w_2, ..., w_n$ are weights, $v_1, v_2, ..., v_n$ are consistency vectors determined through a comparison between the detection results of the image and the at least one portion of the images rotated to the plurality of angles, and t is a predetermined threshold value; and wherein the consistency vector $v_1, v_2, ..., v_n$ for a vector component $v_m$ of a detection result for a rotated at least one portion of the image at one of the plurality of angles is set to one if the potential predetermined object is detected in both the image and the at least one portion of the image rotated to the one of the plurality of angles, otherwise the consistency vector $v_1, v_2, ..., v_n$ for a vector component $v_m$ is set to zero.

9. An object detection system as claimed in claim 6, wherein the image rotation module (112) is configured to rotate the at least one portion of the image by a plurality of increments each of about 1 to 5° in a clockwise or counter-clockwise direction, the object detection module (114) being configured to detect whether the potential predetermined object is detected in one or more of the plurality of increments, and the spatial filter module being configured to determine whether the potential predetermined object is an accurate detection of the predetermined object in response to the object detection module detecting whether the potential predetermined object is in one or more of the plurality of increments.

10. A computer program comprising computer program code means for performing all of the steps of any of claims 1 to 5 when said program is run on a computer.

11. A computer program as claimed in claim 10 embodied on a computer readable medium.

**Patentansprüche**

1. Ein Verfahren (200, 300, 400), um einen vorherbestimmten Gegenstand in einem Bild zu erfassen, wobei das Verfahren (200, 300, 400) **gekennzeichnet ist durch**:

   a) das Erfassen (212, 314, 414) eines potenziell vorherbestimmten Gegenstands im Bild;
   b) das Drehen (214, 318, 422) von mindestens einem Teil des Bildes für ungefähr 1 bis 5° im Uhrzeigersinn oder Gegenuhrzeigersinn;
   c) das Bestimmen (216, 320, 424), ob der potenziell vorherbestimmte Gegenstand im gedrehten mindestens einen Teil des Bildes erfasst ist; und
   d) das Bestimmen (218, 326, 430), ob der potenziell vorherbestimmte Gegenstand eine genaue Erfassung des vorherbestimmten Gegenstandes ist als Antwort auf eine Bestimmung, ob der potenziell vorherbestimmte Gegenstand in den Schritten a) und c) erfasst ist.

2. Verfahren (200, 300, 400) gemäß Anspruch 1, wobei der Schritt des Bestimmens (218, 326, 430), ob der potenziell vorherbestimmte Gegenstand eine genaue Erfassung des vorherbestimmten Gegenstandes ist, das Vergleichen der Größen des potenziell vorherbestimmten Gegenstandes im Bild und des potenziell vorherbestimmten Gegenstandes, der im gedrehten mindestens einen Teil des Bildes (326, 430) erfasst wurde, wobei das Verfahren weiter umfasst:

   das Ausgeben (328, 432) einer Anzeige, dass der potenziell vorherbestimmte Gegenstand eine genaue Erfassung des vorherbestimmten Gegenstandes als Antwort auf den Vergleich ist, der anzeigt, dass die Größen des potenziell vorherbestimmten Gegenstandes im Bild und dem potenziell vorherbestimmten Gegenstand im gedrehten mindestens einen Teil des Bildes im Wesentlichen ähnlich sind; und

das Ausgeben (328, 432) einer Anzeige, dass der potenziell vorherbestimmte Gegenstand ein Fehlalarm als Antwort auf den Vergleich ist, was anzeigt, dass die Größen des potenziell vorherbestimmten Gegenstandes im Bild und dem potenziell vorherbestimmten Gegenstand im gedrehten mindestens einen Teil des Bildes unterschiedlich sind.

**3.** Verfahren (200, 300, 400) gemäß Anspruch 1, weiter umfassend:

das Drehen (318, 422) des mindestens einen Teil des Bildes für mehrere Inkremente, von denen jedes ungefähr 1 bis 5° im Uhrzeigersinn oder Gegenuhrzeigersinn beträgt; das Feststellen (320, 424), ob der potenziell vorherbestimmte Gegenstand in einem oder mehreren der Vielzahl von Inkrementen erfasst ist; und das Bestimmen (326, 430), ob der potenziell vorherbestimmte Gegenstand eine genaue Erfassung des vorherbestimmten Gegenstandes ist als Antwort auf das Erfassen, ob der potenziell vorherbestimmte Gegenstand in einem oder mehreren der Vielzahl von Inkrementen erfasst ist.

**4.** Verfahren (200, 300, 400) nach jedem der Ansprüche 1-3, weiter umfassend: die Ausschnittvergrößerung (418) einer Region im Bild, die den potenziell vorherbestimmten Gegenstand enthält, wobei der Schritt des Drehens (422) von mindestens einem Teil des Bildes, das Drehen der ausschnittvergrößerten Region des Bildes umfasst.

**5.** Verfahren (200, 300, 400) gemäß Anspruch 4, wobei der Schritt des Bestimmens (430), ob der potenziell vorherbestimmte Gegenstand eine genaue Erfassung des vorherbestimmten Gegenstandes ist, die Bestimmung umfasst, ob der potenziell vorherbestimmte Gegenstand in der gedrehten ausschnittvergrößerten Region des Bildes erfasst ist, und wobei das Verfahren weiter umfasst: das Ausgeben (432) einer Anzeige, dass der potenziell vorherbestimmte Gegenstand eine genaue Erfassung des vorherbestimmten Gegenstandes als Antwort auf den potenziell vorherbestimmten Gegenstand ist, der in der gedrehten ausschnittvergrößerten Region des Bildes erfasst ist.

**6.** Ein Gegenstanderfassungssystem (102, 152) **gekennzeichnet durch**:

ein Gegenstanderfassungsmodul (114), das konfiguriert ist, einen potenziell vorherbestimmten Gegenstand in einem Bild zu erfassen;
ein Bilddrehungsmodul (112), das konfiguriert ist, mindestens einen Teil des Bildes um ungefähr 1 bis 5° im Uhrzeigersinn oder Gegenuhrzeigersinn zu drehen;
wobei das Gegenstanderfassungsmodul (114) konfiguriert ist, den potenziell vorherbestimmten Gegenstand im gedrehten mindestens einen Teil des Bildes zu erfassen; ein Raumfiltermodul (116), das konfiguriert ist, Erfassungsresultate vom Gegenstanderfassungsmodul (114) des Bildes und des gedrehten mindestens einen Teil des Bildes zu vergleichen, um zu bestimmen, ob der potenziell vorherbestimmte Gegenstand, der vom Gegenstanderfassungsmodul (114) erfasst ist, eine genaue Erfassung des vorherbestimmten Gegenstandes ist.

**7.** Gegenstanderfassungssystem (102, 152) gemäß Anspruch 6, wobei das Raumfiltermodul (116) konfiguriert ist, eine Bestimmung auszugeben, dass der potenziell vorherbestimmte Gegenstand, der vom Gegenstanderfassungsmodul (114) erfasst ist, eine genaue Erfassung des vorherbestimmten Gegenstandes ist, wenn der potenziell vorherbestimmte Gegenstand im gedrehten mindestens einen Teil des Bildes erfasst ist.

**8.** Gegenstanderfassungssystem (102, 152) nach jedem der Ansprüche 6 und 7, wobei das Raumfiltermodul (116) konfiguriert ist, eine Anzeige auszugeben, dass der potenziell vorherbestimmte Gegenstand, der vom Gegenstanderfassungsmodul (114) erfasst ist, eine genaue Erfassung des vorherbestimmten Gegenstandes ist, wenn die folgenden Gleichungen erfüllt sind: Summe $= w_1 * v_1 + w_2 * v_2 + ... + w_n * v_n$ und Summe $> t$, wobei $w_1, w_2..., w_n$ Gewichte sind, vi, $v_2, ..., v_n$ sind Konsistenzvektoren bestimmt durch einen Vergleich zwischen den Erfassungsresultaten des Bildes und dem mindestens einen Teil des Bildes, der in der Vielzahl von Winkeln gedreht ist, und $t$ ist ein vorherbestimmter Schwellwert; und wobei der Konsistenzvektor $v_1, v_2, ..., v_n$ für eine Vektorkomponente $v_m$ eines Erfassungsresultats für einen gedrehten mindestens einen Teil des Bildes bei einer der Vielzahl von Winkeln auf eins gesetzt wird, wenn der potenziell vorherbestimmte Gegenstand sowohl im Bild als auch im mindestens einen Teil des Bildes, der zu dem einen der Vielzahl von Winkeln gedreht ist, erfasst ist, anderweitig wird der Konsistenzvektor $v_1, v_2, ..., v_n$ für eine Vektorkomponente $v_m$ auf Null gesetzt.

**9.** Gegenstanderfassungssystem nach Anspruch 6, wobei das Bilddrehungsmodul (112) konfiguriert ist, den mindestens einen Teil des Bildes um eine Vielzahl von Inkrementen, von denen jedes ungefähr 1 bis 5° beträgt, im Uhrzeigersinn oder Gegenuhrzeigersinn zu drehen, wobei das Gegenstanderfassungsmodul (114) konfiguriert ist, festzustellen, ob der potenziell vorherbestimmte Gegenstand in einem oder mehreren der Vielzahl von Inkrementen erfasst ist, und das Raumfiltermodul konfiguriert ist, zu bestimmen, ob der potenziell vorherbestimmte Gegenstand eine genaue Erfassung des vorherbestimmten Gegenstandes ist, als Antwort auf das Gegenstanderfassungsmodul, das feststellt, ob der potenziell vorherbestimmte Gegenstand sich in einem oder mehreren der Vielzahl von Inkrementen befindet.

10. Ein Computerprogramm, das Computerprogrammcode zur Ausführung aller Schritte nach irgendeinem der Ansprüche von 1 bis 5 umfasst, wenn das Programm auf einem Computer betrieben wird.

11. Computerprogramm nach Anspruch 10 aufgenommen in einem computerlesbaren Medium.

**Revendications**

1. Procédé (200, 300, 400) pour détecter un objet déterminé dans une image, ledit procédé (200, 300, 400) étant **caractérisé par** les étapes consistant à :

   a) détecter (212, 314, 414) un objet prédéterminé potentiel dans l'image ;
   b) tourner (214, 318, 422) au moins une partie de l'image d'environ 1 à 5° dans le sens des aiguilles d'une montre ou dans le sens contraire des aiguilles d'une montre ;
   c) déterminer (216, 320, 424) si l'objet prédéterminé potentiel est détecté dans au moins une partie tournée de l'image ; et
   d) déterminer (218, 326, 430) si l'objet prédéterminé potentiel est une détection précise de l'objet prédéterminé en réponse à une détermination du fait si l'objet prédéterminé potentiel est détecté aux étapes a) et c).

2. Procédé (200, 300, 400) selon la revendication 1, dans lequel l'étape de détermination (218, 326, 430) du fait si l'objet prédéterminé potentiel est une détection précise de l'objet prédéterminé comprend l'étape consistant à comparer les tailles de l'objet prédéterminé potentiel dans l'image et de l'objet prédéterminé potentiel détecté dans au moins une partie tournée de l'image (326, 430), ledit procédé comprenant, en outre, les étapes consistant à :

   transmettre (328, 432) une indication que l'objet prédéterminé potentiel est une détection précise de l'objet prédéterminé en réponse à la comparaison indiquant que les tailles de l'objet prédéterminé potentiel dans l'image et de l'objet prédéterminé potentiel dans au moins une partie tournée de l'image sont sensiblement similaires ; et
   transmettre (328, 432) une indication que l'objet prédéterminé potentiel est une fausse alarme en réponse à la comparaison indiquant que les tailles de l'objet prédéterminé potentiel dans l'image et de l'objet prédéterminé potentiel dans au moins une partie tournée de l'image sont sensiblement dissemblables.

3. Procédé (200, 300, 400) selon la revendication 1, comprenant, en outre, l'étape consistant à:

   tourner (318, 422) au moins une partie de l'image d'une pluralité d'incréments, chacun d'environ 1 à 5° dans le sens des aiguilles d'une montre ou dans le sens contraire des aiguilles d'une montre ; détecter (320, 424) si l'objet prédéterminé potentiel est détecté dans un ou plusieurs incréments de la pluralité d'incréments ; et déterminer (326, 430) si l'objet prédéterminé potentiel est une détection précise de l'objet prédéterminé en réponse à la détection si l'objet prédéterminé potentiel est détecté dans un ou plusieurs incréments de la pluralité d'incréments.

4. Procédé (200, 300, 400) selon l'une quelconque des revendications 1 à 3, comprenant, en outre, l'étape consistant à : rogner (418) une région dans l'image contenant l'objet prédéterminé potentiel, dans lequel l'étape de rotation (422) d'au moins une partie de l'image comprend la rotation de la région rognée de l'image.

5. Procédé (200, 300, 400) selon la revendication 4, dans lequel l'étape de détermination (430) si l'objet prédéterminé potentiel est une détection précise de l'objet prédéterminé comprend, en outre, la détermination si l'objet prédéterminé potentiel est détecté dans la région rognée tournée de l'image, ledit procédé comprenant, en outre, l'étape consistant à : transmettre (432) une indication que l'objet prédéterminé potentiel est une détection précise de l'objet prédéterminé en réponse au fait que l'objet prédéterminé potentiel est détecté dans la région rognée tournée de l'image.

6. Système de détection d'objet (102, 152) **caractérisé par** :

un module de détection d'objet (114) configuré pour détecter un objet prédéterminé potentiel dans une image ;

un module de rotation d'image (112) configuré pour tourner au moins une partie de l'image d'environ 1 à 5° dans le sens des aiguilles d'une montre ou dans le sens contraire des aiguilles d'une montre ;

ledit module de détection d'objet (114) étant configuré pour détecter l'objet prédéterminé potentiel dans au moins une partie tournée de l'image ;

un module de filtrage spatial (116) configuré pour comparer les résultats de détection provenant du module de détection d'objet (114) de l'image et au moins une partie tournée de l'image

pour déterminer si l'objet prédéterminé potentiel détecté par le module de détection d'objet (114) est une détection précise de l'objet prédéterminé.

7. Système de détection d'objet (102, 152) selon la revendication 6, dans lequel le module de filtrage spatial (116) est configuré pour transmettre une détermination que l'objet prédéterminé potentiel détecté par le module de détection d'objet (114) est une détection précise de l'objet prédéterminé si l'objet prédéterminé potentiel est détecté dans au moins une partie tournée de l'image.

8. Système de détection d'objet (102, 152) selon l'une quelconque des revendications 6 et 7, dans lequel le module de filtrage spatial (116) est configuré pour transmettre une indication que l'objet prédéterminé potentiel détecté par le module de détection d'objet (114) est une détection précise de l'objet prédéterminé si les équations suivantes sont satisfaites : somme = $w_1 * v_1 + w_2 * v_2 + ... + w_n * v_n$, et somme > t, où $w_1, w_2...,w_n$ sont des poids, vi, $v_2, ..., v_n$ sont des vecteurs de consistance déterminés par une comparaison entre les résultats de détection de l'image et au moins une partie des images tournées selon une pluralité d'angles, et t est une valeur seuil prédéterminée ; et dans lequel le vecteur de consistance $v_1, v_2, ..., v_n$ pour une composante de vecteur $v_m$ d'un résultat de détection pour au moins une partie tournée de l'image selon un angle de la pluralité d'angles est mis à un si l'objet prédéterminé potentiel est détecté à la fois dans l'image et dans au moins une partie de l'image tournée selon un angle parmi la pluralité d'angles ; sinon, le vecteur de consistance $v_1, v_2, ..., v_n$ pour une composante de vecteur $v_m$ est mis à zéro.

9. Système de détection d'objet selon la revendication 6, dans lequel le module de rotation d'image (112) est configuré pour tourner au moins une partie de l'image d'une pluralité d'incréments, chacun d'environ 1 à 5° dans le sens des aiguilles d'une montre ou dans le sens contraire des aiguilles d'une montre, le module de détection d'objet (114) étant configuré pour détecter si l'objet prédéterminé potentiel est détecté dans un ou plusieurs incréments de la pluralité d'incréments, et le module de filtrage spatial étant configuré pour déterminer si l'objet prédéterminé potentiel est une détection précise de l'objet prédéterminé en réponse au module de détection d'objet détectant si l'objet prédéterminé potentiel est dans un ou plusieurs incréments de la pluralité d'incréments.

10. Programme d'ordinateur comprenant des moyens de codage de programme d'ordinateur pour exécuter toutes les étapes selon l'une quelconque des revendications 1 à 5 lorsque ledit programme tourne sur un ordinateur.

11. Programme d'ordinateur selon la revendication 10, incorporé sur un support lisible par un ordinateur.

102

INPUT DEVICE 106

INPUT MODULE 108

IMAGE ROTATION MODULE 112

CONTROLLER 104

OBJECT DETECTION MODULE 114

SPATIAL FILTER MODULE 116

OUTPUT DEVICE 118

MEMORY 110

*FIG. 1A*

EP 1 807 793 B1

INPUT
DEVICE
106

INPUT
MODULE
108

OBJECT
DETECTION
MODULE
114

CONTROLLER
104

CROPPING
MODULE
154

SPATIAL
FILTER
MODULE
116

OUTPUT
DEVICE
118

IMAGE
ROTATION
MODULE
112

OBJECT
DETECTION
MODULE
156

MEMORY
110

*FIG. 1B*

EP 1 807 793 B1

200 ⟍

START ⟋ 210

↓

DETECT A POTENTIAL
OBJECT IN AN IMAGE ⟋ 212

↓

ROTATE AT LEAST ONE
PORTION OF THE IMAGE ⟋ 214

↓

DETERMINE WHETHER POTENTIAL
OBJECT IS DETECTED IN THE ROTATED
AT LEAST ONE PORTION OF THE IMAGE ⟋ 216

↓

DETERMINE WHETHER POTENTIAL
OBJECT IS AN ACCURATE DETECTION
OF THE OBJECT ⟋ 218

↓

END ⟋ 220

*FIG. 2*

300 ⟶

START ⟶ 310

RECEIVE INPUT IMAGE ⟶ 312

RUN OBJECT DETECTION MODULE ⟶ 314

INPUT RESULTS INTO SPATIAL FILTER MODULE ⟶ 316

ROTATE IMAGE ⟶ 318

RUN OBJECT DETECTION MODULE ⟶ 320

INPUT RESULTS INTO SPATIAL FILTER MODULE ⟶ 322

324

YES    ADDITIONAL IMAGE ROTATION ?    NO

PROCESS RESULTS FOR DETECTED OBJECT(S) ⟶ 326

328 ⟶ OUTPUT DETECTED OBJECT(S)

*FIG. 3*    330 ⟶ END

START ~410

400 ~

RECEIVE INPUT IMAGE ~412

RUN OBJECT DETECTION MODULE ~414

INPUT IMAGE INTO CROPPING MODULE ~416

CROP OBJECT REGION(S) ~418

INPUT RESULTS INTO SPATIAL FILTER ~420

ROTATE CROPPED REGION(S) ~422

RUN OBJECT DETECTION MODULE ~424

INPUT RESULTS INTO SPATIAL FILTER ~426

PROCESS RESULTS FOR DETECTED OBJECT(S) ~430

428

YES — ADDITIONAL REGION ROTATION ? — NO

OUTPUT DETECTED OBJECT(S) ~432

END ~434

*FIG. 4*

FIG. 5

EP 1 807 793 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6055334 A
- US 2003016860 A

- EP 1530156 A

**Non-patent literature cited in the description**

- **Y. Freund ; R. Schapire.** A Short Introduction to Boosting. *Journal of Japanese Society for Artificial Intelligence,* September 1999, 771-780